# EUROPÄISCHE PATENTANMELDUNG

(11) **EP 1 892 113 A1**
(43) Veröffentlichungstag der Anmeldung: **27.02.2008**
(21) Anmeldenummer: 06017409.1
(22) Anmeldetag: 22.08.2006
(51) Int. Cl.: B41M 5/52, D21H 19/42, D21H 21/52, C09D 139/06, C09D 153/02

(54) **Verfahren zur Herstellung einer Beschichtungszusammensetzung und beschichtetes Substrat**

(71) Anmelder: M-Real Oyj, 02100 Espoo (FI)
(72) Erfinder: Becker, Franz Josef, 51465 Bergisch Gladbach (DE); Uerlings, Viktor, 52351 Düren (DE)
(74) Vertreter: Polypatent

(57) **Zusammenfassung**

Die vorliegende Erfindung betrifft ein Verfahren zur Herstellung einer Beschichtungszusammensetzung umfassend die Schritte:
a) Vorlage einer wässrigen Zusammensetzung enthaltend mindestens ein Plastikpigment mit einer Glasübergangstemperatur (T_{g}) von mindestens 50 °C, und
b) Zugabe einer kationischen Substanz enthaltend Salze von zweiwertigen und/oder dreiwertigen Kationen, wobei der Beschichtungszusammensetzung vor Zugabe der kationischen Substanz in Schritt b) mindestens ein anionisches Pigment mit einem mittleren Teilchendurchmesser von 1 nm bis 500 nm zugegeben wird und/oder der Beschichtungszusammensetzung nach Zugabe der kationischen Substanz in Schritt b) mindestens ein kationisches Pigment mit einem mittleren Teilchendurchmesser von 1 nm bis 500 nm zugegeben wird,
sowie ein beschichtetes Substrat, das mit der Beschichtungszusammensetzung beschichtet wurde.

## Beschreibung

Der Gegenstand der vorliegenden Erfindung ist ein Verfahren zur Herstellung von Beschichtungszusammensetzungen, wobei die so hergestellte Beschichtungszusammensetzungen auf Substrate aufgebracht werden sowie Substrate, die entsprechend beschichtet wurden.

In der Papierindustrie besteht ein ständiges Bestreben, die Bedruckbarkeit von Papieren zu verbessern. Dies gilt insbesondere für Papiere, die im Ink-Jet-Druck verwendet werden.

Grundsätzlich kann man zwei Klassen von Papieren unterscheiden: Die Naturpapiere und die gestrichenen Papiere. Bei den gestrichenen Papieren wird auf der zu bedruckenden Seite des Papiers mindestens eine Beschichtung aufgebracht, welche üblicherweise aus Pigmenten, Bindemitteln und Additiven besteht. Zur Verbesserung der Bedruckbarkeit können auch mehrere Schichten aufgebracht werden. Demgegenüber wird bei sogenannten "Naturpapieren" keine entsprechende Beschichtung wie bei gestrichenen Papieren aufgebracht. Vielmehr wird oft die Oberfläche mit einer Oberflächenpräparation versehen, die die Bedruckbarkeit des Naturpapiers verbessert, allerdings nicht das Erscheinungsbild, also das Aussehen sowie das Anfühlen, also die Haptik des Papiers beeinflusst.

Allerdings führt die Faserstruktur der Naturpapiere dazu, deren Oberfläche vereinfacht aus Bergen und Tälern besteht, dass bei den unterschiedlichsten Druckverfahren die Druckfarbe unterschiedlich angenommen wird. Dies wirkt sich insbesondere bei mehrfarbigen Drucken nachteilig aus, da es hier zu einer Überlagerung der einzelnen Druckfarben kommt und so die Oberflächenstruktur der Naturpapiere in dem Druck besonders sichtbar wird.

Bei den sogenannten "Transparentpapieren" kommt als besondere Schwierigkeit noch hinzu, dass die Oberfläche eines Transparentpapiers in der Regel wenig saugfähig ist. Außerdem sind die Fasern des Transparentpapiers im Regelfall hoch ausgemahlen, so dass sie besonders empfindlich auf Feuchtigkeit reagieren und ein Transparentpapier sofort bei Kontakt mit Feuchtigkeit wellig wird.

Im Stand der Technik haben die unterschiedlichsten Oberflächenbeschichtungen Eingang gefunden, um die Ink-Jet-Druckeigenschaften eines Papiers zu verbessern. Üblicherweise enthalten solche Beschichtungen Pigmente, die für die Verbesserung der Ink-Jet-Eigenschaften optimiert wurden. Da die beim Ink-Jet-Druck verwendeten Tinten anionisch sind, hat es sich als vorteilhaft erwiesen, die auf der Oberfläche eines Substrats aufgebrachten Beschichtungen aus kationischen Beschichtungsmassen aufzubringen. Die kationische Ladung verbleibt dann in der getrockneten Beschichtungszusammensetzung und fixiert nachfolgend aufgebrachte Ink-Jet-Tinten dauerhaft.

Allerdings stellt sich bei Beschichtungszusammensetzungen zur Herstellung einer Ink-Jet-Akzeptorschicht das Problem, das kationische Substanzen zur Fixierung in der Beschichtungszusammensetzung enthalten sind, und sich nachteilig auf andere Bestandteile auswirken können. Hier seien insbesondere Bindemittel genannt.

Dies gilt insbesondere für die Verwendung von Plastikpigmenten in Ink-Jet-Beschichtungszusammensetzung, die zu einer Koagulation der Beschichtungszusammensetzung neigen, wenn kationische Substanzen und insbesondere polymere kationische Substanzen zugegeben werden.

Die Aufgabe der vorliegenden Erfindung ist die Bereitstellung einer Beschichtungszusammensetzung, sowie eines Verfahrens zur Herstellung der Beschichtungszusammensetzung, die die Bedruckbarkeit gestrichener Papiere deutlich verbessert, sowie die Haptik und das optische Erscheinungsbild von Naturpapieren vereint. Ein weiterer Gegenstand der vorliegenden Erfindung ist die Bereitstellung eines Verfahrens zur Herstellung von beschichteten Substraten, die Naturpapiere sein können sowie ein beschichtetes Substrat, erhältlich nach dem vorgenannten Verfahren.

Die technische Aufgabe der vorliegenden Erfindung wird gelöst durch ein Verfahren zur Herstellung einer Beschichtungszusammensetzung umfassend die Schritte:
a) Vorlage einer wässrigen Zusammensetzung enthaltend mindestens ein Plastikpigment mit einer Glasübergangstemperatur (T_{g}) von mindestens 50 °C, und
b) Zugabe einer kationischen Substanz enthaltend Salze von zweiwertigen und/oder dreiwertigen Kationen, wobei der Beschichtungszusammensetzung vor Zugabe der kationischen Substanz in Schritt b) mindestens ein anionisches Pigment mit einem mittleren Teilchendurchmesser von 1 nm bis 500 nm zugegeben wird und/oder der Beschichtungszusammensetzung nach Zugabe der kationischen Substanz in Schritt b) mindestens ein kationisches Pigment mit einem mittleren Teilchendurchmesser von 1 nm bis 500 nm zugegeben wird.

Die Glasübergangstemperatur (T_{g}) wird vorzugsweise nach der DSC-Methode bestimmt. Vorzugsweise weist das Plastikpigment in Schritt a) eine Glasübergangstemperatur von mindestens 55 °C, weiter bevorzugt von mindestens 60 °C und am meisten bevorzugt von mindestens 65 °C auf. Vorzugsweise wird die Glasübergangstemperatur gemäß der ISO 11357 bestimmt.

Vorzugsweise ist das Plastikpigment in Schritt a) ein Styrol-Butadien-Copolymer oder Styrolpolymer, welches vorzugsweise eine Dispersion eines Styrol-Butadien-Copolymers oder Styrolpolymers ist.

In einer weiter bevorzugten Ausführungsform ist das Plastikpigment in Schritt a) ein nicht filmbildendes Plastikpigment. Unter nicht filmbildenden Plastikpigment wird im Sinne der vorliegenden Erfindung ein Plastikpigment verstanden, welches nach Aufbringung in der Beschichtungszusammensetzung auf einem Substrat im Wesentlichen seine partikuläre Struktur bewahrt und nicht zu einem Film koalesziert.

In einer weiter bevorzugten Ausführungsform ist das Plastikpigment in Schritt a) ein massives und/oder Hohlkörper-Plastikpigment. Vorzugsweise weist das Plastikpigment in Schritt a) einen mittleren Partikeldurchmesser von 100 nm bis 2.000 nm auf, weiter bevorzugt von 140 nm bis 1.500 nm und am meisten bevorzugt von 140 nm bis 1.000 nm.

Vorzugsweise ist die kationische Substanz in Schritt b) eine monomere kationische Substanz. Die kationische Substanz in Schritt b) kann ausgewählt sein aus Verbindungen, enthaltend Metalle oder Halbmetalle der zweiten oder dritten Hauptgruppe des Periodensystems der Elemente oder Mischungen derselben. Vorzugsweise ist die kationische Substanz in Schritt b) ausgewählt aus Verbindungen, enthaltend Magnesium, Bor, Aluminium oder Mischungen derselben. Weiter bevorzugt ist die kationische Substanz in Schritt b) ausgewählt aus Aluminiumformiat, Aluminiumsulfat, Alaun, niedermolekularen Aluminiumverbindungen, Aluminiumnitrat, Aluminiumnitratsulfat, Polyaluminiumchlorid (PAC) oder Mischungen derselben.

Vorzugsweise wird von der kationischen Substanz in Schritt b) der Beschichtungszusammensetzung soviel zugegeben, dass nach erfolgter Zugabe die Beschichtungszusammensetzung eine kationische Ladung aufweist.

Das anionische Pigment und/oder kationische Pigment ist vorzugsweise ausgewählt aus der Gruppe Oxid und/oder gemischtes Oxid eines Metalls, Oxid und/oder gemischtes Oxid eines Halbmetalls/Halbleiters oder Mischungen derselben. Vorzugsweise können die Pigmente ausgewählt sein aus der Gruppe, enthaltend Silicium, Magnesium, Calcium, Aluminium, Zink, Chrom, Eisen, Kupfer, Zinn, Blei oder Mischungen derselben. Bevorzugte Pigmente sind Kieselsäuren, Gibbsit, Bayerit, Nordostrandit, Boehmit, Pseudoboehmit, Diaspor, Aluminiumoxide, vorzugsweise Korund, Aluminiumhydrat, Magnesiumsilicat, basisches Magnesiumcarbonat, Titandioxid, Zinnoxid, Aluminiumsilicat, Calciumcarbonat, Talkum, Clay, Hydrotalcid, Siliciumdioxid, kolloidales Siliciumdioxid, präzipitiertes Siliciumdioxid, anorganische Stoffe, wie z.B. Diatomit, organische Stoffe, wie z.B. harzförmige Pigmente aus Melamin-Formaldehydharzen, Harnstoff-Formaldehydharzen, Ethylenharzen, Styrolharzen, Acrylatharzen oder Kombinationen hiervon.

Als Pigment können auch kolloidale Suspensionen von SiO₂-Partikeln, welche vorzugsweise nicht-poröse SiO₂-Partikel sind, verwendet werden. Die Suspension kann eine anionische oder kationische Ladung aufweisen. Die Partikelgröße der SiO₂-Partikel kann hierbei von 1 bis 100 nm variieren, wobei die Partikelgröße vorzugsweise bei 10 bis 50 nm liegt. Exemplarisch seien für diese Klasse der Pigmente die Cartacoat^{®} K Typen der Fa. Clariant genannt, insbesondere das Cartacoat^{®} 301A liquid, das Cartacoat^{®} 302A liquid, das Cartacoat^{®} 302C liquid und das Cartacoat^{®} 303A liquid. Alternativ kann anionisches oder kationisches kolloidales Siliciumdioxid verwendet werden, das unter dem Handelsnamen Ludox^{®} CL oder Ludox^{®} TMA von der Firma Grace-Davison vertrieben wird.

Vorzugsweise weist das anionische Pigment und/oder kationische Pigment einen mittleren Teilchendurchmesser von 10 nm bis 100 nm und weiter bevorzugt von 10 nm bis 70 nm auf.

Es ist außerdem bevorzugt, dass das anionische Pigment und/oder kationische Pigment eine spezifische BET-Oberfläche von 40 bis 800 m²/g aufweist. Weiter bevorzugt liegt die BET-Oberfläche zwischen 40 und 400 m²/g .

Vorzugsweise sind in der Beschichtungszusammensetzung weitere Additive enthalten, welche vorzugsweise Fixiermittel für Ink-Jet-Tinten und/oder Bindemittel sein können. Bevorzugte Additive sind Polyvinylpyrrolidon, Poly-DADMAC (Diallyldimethylammoniumchlorid), Polyvinylalkohol, modifizierter Polyvinylalkohol, Polyvinylacrylate, Polyvinylacetate, Polyacrylate, Polystyrolacrylate, synthetische Bindemittel, Bindemittel natürlichen Ursprungs wie z.B. Stärke, modifizierte Stärke, Carboxymethylcellulose oder Mischungen derselben. Als Additive können Bindemittel, Dispergiermittel, Fixiermittel und/oder Kationisierungsmittel in der Beschichtungszusammensetzung enthalten sein.

In einer bevorzugten Ausführungsform wird in Schritt b) zunächst soviel der kationischen Substanz, enthaltend zweiwertige und/oder dreiwertige Kationen zugegeben, so dass die Beschichtungszusammensetzung eine kationische Gesamtladung aufweist (Vorkationisierung). Nachfolgend können weitere kationische Substanzen oder kationische Polymere zugegeben werden (Endkationisierung). Hierdurch wird vorteilhafterweise die Stabilität der Beschichtungszusammensetzung erhöht. Außerdem wird so vorzugsweise die Ink-Jet-Bedruckbarkeit eines hergestellten Tintenstrahlaufzeichnungsmaterials weiter verbessert. Als kationisches Polymer wird vorzugsweise Poly-DADMAC eingesetzt, welches als Handelsprodukt Catiofast ® CS erhältlich ist. Alternativ können auch Polyamine verwendet werden.

In einer weiteren bevorzugten Ausführungsform ist in der Beschichtungszusammensetzung kein Bindemittel enthalten.

Es ist außerdem möglich, das in der Beschichtungszusammensetzung Tenside enthalten sind. Das Tensid kann vorzugsweise ein anionisches, kationische, nicht ionisches oder amphoteres Tensid sein.

Geeignete Tenside können beispielsweise ausgewählt sein aus (1) hydrophilen Polydialkylsiloxanen, (2) Polyalkylenglykol, (3) Polypropylenoxid-Polyethylenoxid-Copolymeren, (4) Fettsäureester-modifizierten Verbindungen von Phosphat, Sorbitan, Glycerin, Polyethylenglycol, Sulfosuccinsäuren, Sulfonsäure oder Alkylamin, (5) Polyoxyalkylen-modifizierten Verbindungen von Sorbitanestern, Fettaminen, Alkanolamiden, Rizinusöl, Fettsäure, Fettalkohol, (6) quarternären Alkoholsulfat-Verbindungen, (7) Fettimidazolinen, (8) polyethermodifizierten Trisiloxanen und (9) ethoxylierten Acetylendiolen (z.B. 1,2,5,8-Tetramethyl-6-dodecyn-5,8-Diolethoxylate) oder Mischungen davon.

Spezifische Beispiele für wasser- oder alkohollösliche Tenside aus den oben genannten Stoffklassen sind zum Beispiel (1) Poly(oxyalkylen)modifikationen von (a) Sorbitanestern (z.B. Alkamuls PSML-4 (Poly(oxyethylen)sorbitanmonolaurat), Alkamuls PSMO-20 (Poly(oxyethylen)sorbitanmonooleat), Alkamuls PSTO-20 (Poly(oxyethylen)sorbitantrioleat), Alkaril Chemicals); (b) Fettamine (z.B. Alkaminox T-2, T-5 (Talgaminoxyethylat), Alkaminox SO-5(Sojaaminoxyethylat), Alkaril Chemicals), (Icomeen T-2, Icomeen T-15, ICI Chemicals); (c) Rizinusöl (z.B. Alkasurf CO-10, Alkasurf CO-25B (Rizinusöloxyethylate), Alkaril Chemicals); (d) Alkanolamid (z.B. Alkamide C-2, C-5 (Koskosnußölalkanolamidoxethylate), Alkaril Chemicals); (e) Fettsäuren (z.B. Alkasurf 075-9, Alkasurf 0-10, Alkasurf 0-14 (Ölsäureoxyethylate), Alkasurf L-14 (Laurinsäureoxyethylate), Alkasurf P-7 (Palmitinsäureoxyethylate) Alkaril Chemicals); (f) Fettsäurealkohol (z.B. Alkasurf LAN-1, LAN-3, Alksasurf TDA-6, Alkasurf SA-2, (lineare Alkoholoxyethylate), Alkasurf NP-1, NP-11, Rexol 130 (Nonylphenoloxyethylate), Alkasurf OP-1, OP-12 (Octylphenoloxyethylate), Alkasurf LA-EP-15, Alkasurf LA-EP-25, Alkasurf LA-EP-65 (lineare Alkoholoxyalkylate)); (2) hydrophile Poly(dimethylsiloxane) wie etwa (a) mit einer Monocarbinolendgruppe versehenes Poly(dimethlysiloxan) (PS558, Petrarch Systems Inc.) und Dicarbinolendgruppe versehenes Poly(dimethylsiloxan) (PS555, PS556, Petrarch Systems Inc.); (b) Poly(dimethylsiloxan)-b-Poly(methylsiloxanalkylenoxid)-Copolymere (PS 073, PS 072, PS 071, Petrarch Systems Inc.), Alkasil HEP 182-280, Alkasil HEP 148-330 (Alkaril Chemicals), nichthydrolysierbare, Si-C-Bindungen enthaltende Copolymere; (c) Poly(dimethylsiloxan)-b-Poly(propylenoxid)-b-Poly(ethylenoxid)-Copolymere (Alkasil NEP 73-70, Alkaril Chemicals) ein hydrolysierbares, Si-O-C-Bindungen enthaltendes Copolymer; (d) polyquaternäre Poly(dimethylsiloxan)-Copolymere (die durch die Additionsreaktion eines α,ω-Wasserstoflpolysiloxans mit olefinische Bindungen enthaltenden Epoxiden und anschließend Umsetzen des Produkts mit einem Diamin erhalten werden können); (3) Fettimidazoline und ihre Derivate wie etwa (a) Alkazine-O (Oleylderivat); (b) Alkazine TO (Tallölderivate); (c) Alkateric 2C1B (Dicarbonsäurekokosimidazolin-natriumsalz) Alkaril Chemicals; (d) Arzoline-4; (e) Arzoline-215, Baker Chemicals; (4) Fettsäureester von (a) Phosphaten (z.B. Alkaphos B6-56A, Alkaril Chemicals); (b) Sorbitan (z.B. Alkamuls STO (Sorbitantrioleat), Alkamuls SML (Sorbitanmonolaurat), Alkamuls SMO (Sorbitanmonooleat), Alkaril Chemicals); (c) Glycerinverbindungen (z.B. Alkamuls GMO-45LG (Glycerylmonooleat), Alkamuls GDO (Glyceryldioleat), Alkamuls GTO (Glyceryltrioleat); (d) Poly(ethylenglykole) (Alkamuls 600 DO (Dioleat), Alkamuls 400-ML (Monolaurat), Alkamuls 600 MO (Monooleat), Alkamuls 600 DL (Dilaurat), Alkamuls 600 DT (Ditalg), Alkaril Chemicals); (e) Sulfobernsteinsäure (z.B. Alkasurf SS-O-75 (Natriumdioctyl-sulfosuccinat), Alkasurf SS-DA4-HE (oxyethyliertes Alkoholsulfosuccinat), Alkasurf SS-L7DE (Natriumsulfosuccinatester von Laurindiethanolamid), Alkasurf SS-L-HE (Natriumlaurylsulfosuccinat), Alkaril Chemicals); (f) Sulfonsäure (z.B. Alkasurf CA (Calciumdodecylbenzolsulfonat), Alkasurf IPAM (I-sopropylamindodecylbenzolsulfonat), Alkaril Chemicals); (g) Alkylamine (z.B. Alkamide SDO (Sojadiethanolamid), Alkamide CDE (Kokosdiethanolamid), Alkamide 2104 (Kokosnußfettsäurediethanolamid), Alkamide CMA (Kokosmonoethanolamid), Alkamide L9DE (Lauryldiethanolamid), Alkamide L7Me (Laurylmonoethanolamid), Alkamide L1PA (Laurylmonoisopropylamid), Alkaril Chemicals); (5) quaternäre Verbindungen wie etwa (a) nicht-polymeres quaternäres Ammoniumethosulfat (z.B. Finquat CT, Cordex T-172, Finetex Corporation); (b) quaternäres Dialkyldimethylmethosulfat (z.B. Alkaquat DHTS (hydrierter Talg)); (c) alkoxyliertes quaternäres Difettmethosulfat (z.B. Alkasurf DAET (Talgderivat)); (d) quaternäres Fettidazolinmethosulfat (z.B. Alkaquat T (Talgderivate), Alkaril Chemicals); (6) wasserlösliche Copolymere lipophilen Poly(propylenoxids) mit hydrophilem Poly(ethylenoxid) wie etwa (a) methanollösliches Tetronic 150R1, Pluronic L-101, Tetronic 902, Tetronic 25R2 (BASF Corporation), Alkatronic EGE-1 (Alkaril Chemicals); (b) wasserlösliches Tetronic 908, 50R8, 25R8, 904, 90R4, Pluronic F-77, alle von BASF Corporation, und Alkatronic EGE 25-2 und PGP 33-8 von Alkaril Chemicals; (7) Poly(alkylenglykol) und seine Derivate wie etwa (a) Polypropylenglykol (Alkapol PPG 425, Alkapol PPG-4000, Alkaril Chemicals); (b) Poly(propylenglykoldimethacrylat), Poly(ethylenglykoldiacrylat), Poly(ethylenglykoldimethacrylat), Poly(ethylenglykolmonomethylether), Poly(ethylenglykoldimethylether), Poly(ethylenglykoldiglycidylether) (alle von Polysciences); (c) Poly(1,4-oxybutylenglykol) (Scientific Polymer Products) und dergleichen ein.

Bevorzugte Tenside schließen lineare Alkoholoxyethylate (z.B. von Alkaril Chemicals erhältliches Alkasurf LA-EP-65, LA-EP-25 und LA-EP-15), Nonylphenoloxyethylate (z.B. von Alkaril Chemicals erhältliches Alkasurf NP-11 und von Hart Chemicals erhältliches Rexol 130), Octylphenoloxyethylate (z.b. von Alkaril Chemicals erhältliches Alkasurf OP-12), Ölsäureoxyethylate (z.B. von Alkaril Chemicals erhältliches Alkasurf 0-14), Poly(dimethylsiloxan)-b-Poly(propylenoxid)-b-Poly(ethylenoxid)-Copolymere (z.B. von Alkaril Chemicals erhältliches Alkasil NEP 73-70), Rizinusöloxyethylate (z.B. von Alkaril Chemicals erhältliches Alkasurf CO25B), Kokosimidazolindicarbonsäurenatriumsalze (z.B. von Alkaril Chemicals erhältliches Alkateric 2C1B) und Kokosnußfettsäurediethanolamid (z.B. von Alkaril Chemicals erhältliches Alkamid S104) ein. Die Alkasurf-Tenside sind vorteilhafterweise biologisch abbaubar.

Weiter bevorzugt sind ethoxylierte Acetylendiole (z.B. 1,2,5,8-Tetramethyl-6-dodecyn-5,8-Diolethoylate), erhältlich als DYNOL ® 604 der Air Products Chemicals Europe BV, Utrecht.

Weiter bevorzugte Tenside sind mit Ethylenoxid/Propylenoxid modifizierte Fettalkohole, sowie modifizierte Fettalkoholpolyglykolether, wie z.B. das Hydropalat^{®} 120 XP (erhältlich bei Cognis/Henkel)

Bei dem Verfahren zur Herstellung der Beschichtungszusammensetzung der vorliegenden Erfindung weist das Plastikpigment vor Zugabe der kationischen Substanz vorzugsweise eine anionische Gesamtladung auf.

Ein weiterer Gegenstand der vorliegenden Erfindung ist ein Verfahren zur Herstellung eines beschichteten Substrates, umfassend die Schritte:
a) Bereitstellung eines Substrates,
b) Herstellen einer Beschichtungszusammensetzung entsprechend dem vorgenannten Verfahren,
c) Aufbringen der Beschichtungszusammensetzung auf mindestens einer Seite des Substrates, und
d) Trocknen der Beschichtungszusammensetzung.

Im Sinne dieser Erfindung ist unter einer Beschichtung vorzugsweise auch eine Imprägnierung zu verstehen. Somit wird das Substrat in Schritt c) vorzugsweise beschichtet und/oder imprägniert.

Vorzugsweise ist das Substrat ein Papiersubstrat und insbesondere ein Papier oder Karton und weiter bevorzugt ein Transparentpapier und/oder Transparentkarton. Weiter bevorzugt kann das Substrat aus zwei flächigen Substraten zusammengeklebt sein. Vorzugsweise ist das Substrat ein weißes oder farbiges Papiersubstrat.

Vorzugsweise hat der Füllstoff, enthalten im Substrat, gemäß DIN EN ISO 787-5 eine Ölzahl von 10 - 150 g/100g Füllstoff, weiter bevorzugt von 30 - 80 g/100g Füllstoff und besonders bevorzugt von 30 - 70 g/100g Füllstoff.

Der Füllstoff, enthalten im Substrat, kann vorzugsweise ausgewählt werden aus der Gruppe bestehend aus Kreide, präzipitierte Kreide, Clay, Talkum, klaziniertem Clay, Aluminiumoxid, Aluminiumhydroxid, Gips, Aluminiumoxidhydrat, Siliciumdioxid, Kieselsäure, Diatominerde, Titandioxid und Mischungen derselben. Der Füllstoff kann des Weiteren vorzugsweise eine anionische oder eine kationische Gesamtladung aufweisen.

Der Anteil an Füllstoff in dem Substrat ist vorzugsweise 3-30 Gew.-%, bezogen auf das Gesamtgewicht des Papiersubstrates nach Konditionierung bis zur Gewichtskonstanz bei 110°C (atro). Vorzugsweise ist der Anteil an Füllstoff 5 - 25 Gew.-%, weiter bevorzugt 7 - 20 Gew.-%, besonders bevorzugt 9 - 18 Gew.-% und am meisten bevorzugt 10 -15 Gew.-%.

Das Substrat kann vorzugsweise mindestens ein Additiv enthalten. Bevorzugte Additive sind Nassfestmittel, Stärken, Entschäumer, Retentionsmittel, Aufheller, Farbstoffe und Mischungen derselben. In einer bevorzugten Ausführungsform ist in dem Papiersubstrat ein Anteil an Nassfestmittel vorhanden, der es ermöglicht, dass in den nachfolgenden Bearbeitungsschritten das Papiersubstrat erneut befeuchtet werden kann, ohne dass die Festigkeit durch Wasseraufnahme soweit herabgesetzt ist, dass die Papierbahn bei nachfolgenden Bearbeitungsschritten abreißt.

Das Substrat kann alle dem Fachmann gebräuchlichen Fasern enthalten, wie z.B. Zellstoff oder Holzschliff. Bevorzugt enthält das Substrat eine Mischung aus Langfaser- und Kurzfaser-Zellstoffen.

Das Substrat hat vorzugsweise ein Flächengewicht gemessen nach ISO 536 von 40 bis 400 g/qm. Vorzugsweise ist das Flächengewicht 60 bis 300 g/qm, weiter bevorzugt 70 bis 280 g/qm und am meisten bevorzugt 80 bis 250 g/qm.

Weiter bevorzugt ist das Substrat ein Transparentpapier. Die Transparenz liegt vorzugsweise im Bereich von 50% bis 80%, gemessen gemäß der ISO 2469. Das beschichtete Substrat weist vorzugsweise eine Transparenz im Bereich von 50% bis 80%, gemessen gemäß der ISO 2469, auf.

Die Beschichtungszusammensetzung kann vorzugsweise auf mindestens einer Seite des Substrats aufgebracht werden. Vorzugsweise wird die Beschichtungszusammensetzung auf einer Seite des Papiersubstrates online aufgebracht, also innerhalb der Papiermaschine, auf der das Papiersubstrat bereitgestellt wurde. Bevorzugte Auftragsaggregate sind die Leimpresse, der Leimpresse ähnliche Auftragsaggregate, die Filmpresse, das Billblade, der Curtaincoater, die Luftbürste, das Blade, der Rakelauftrag und das Spraycoating.

Es ist allerdings auch möglich, dass die Beschichtungszusammensetzung in einem der Herstellung des Substrats nachfolgenden Veredelungsschritt auf der mindestens einen Seite des Substrats aufgebracht wird. Dies kann mit Auftragsaggregaten geschehen, die dem Fachmann geläufig sind, wie z.B. mit einer Leimpresse, einer Leimpresse ähnlichen Auftragsaggregat, einer Filmpresse, einem Blade, einer Luftbürste, einem Rakel, einem Curtaincoater, einem Spraycoater oder einem Reverse-Gravur-Auftragsaggregat.

Vorzugsweise wird in Schritt c) soviel der Beschichtungszusammensetzung aufgebracht, dass nach Trocknen in Schritt d) 1 bis 15 g/m² (atro) der getrockneten Beschichtungszusammensetzung auf dem Substrat vorhanden sind. Vorzugsweise sind nach dem Trocknen 1,5 bis 10 g/m², weiter bevorzugt 2 bis 5 g/m² (atro) der getrockneten Beschichtungszusammensetzung auf dem Substrat vorhanden.

Die Beschichtungszusammensetzung kann auf eine Seite des Substrats oder auf beiden Seiten des Substrats, also auf zwei entgegengesetzten Seiten des Substrats, aufgebracht werden.

Ein weiterer Gegenstand der vorliegenden Erfindung ist die Beschichtungszusammensetzung erhältlich nach dem vorgenannten Verfahren, sowie ein beschichtetes Substrat, erhältlich nach dem vorgenannten Verfahren.

Außerdem ist ein beschichtetes Substrat umfassend,
a) ein Substrat, und
b) eine Beschichtung, aufgebracht auf mindestens einer Seite des Substrates, wobei die Beschichtung aufgebracht wird aus einer Beschichtungszusammensetzung, erhältlich nach dem oben genannten Verfahren und die Beschichtungszusammensetzung nach Aufbringung getrocknet wird,

### Gegenstand der vorliegenden Erfindung.

Unerwarteterweise verbessert die Beschichtungszusammensetzung nach Aufbringung auf das Substrat die Bedruckbarkeit des Substrats, ohne die optischen oder die haptischen Eigenschaften des Substrates wesentlich oder erkennbar nachteilig zu beeinflussen. Das Substrat behält oder behält nahezu den optischen und haptischen Eindruck eines nicht behandelten Substrats und insbesondere eines Naturpapiers. Die Beschichtungszusammensetzung ist vollflächig und gleichmäßig auf der Oberfläche des Substrates vorhanden und verhindert hierbei unerwarteterweise die durch die Berge und Täler der Substratoberfläche sonst hervorgerufene Unregelmäßigkeit eines nachfolgend aufgebrachten Druckes und insbesondere eines Ink-Jet-Druckes. Die Druckbildwolkigkeit (mottling) des bedruckten Papiers ist ein Indiz für die Gleichmäßigkeit des Druckes und bei den beschichteten Substraten der vorliegenden Erfindung ist die Druckbildwolkigkeit sehr gering. Des weiteren hat das Substrat der vorliegenden Erfindung eine Steifigkeit und ein Volumen, das vergleichbar mit nicht behandelten und nicht gestrichenen Substraten ist.

Falls Transparentpapiere als Substrate verwendet werden, wird die Transparenz und Homogenität der Durchsicht durch die Beschichtung nicht oder im Wesentlichen nicht beeinflusst. Außerdem wird das Transparentpapier nach Inkjet-Bedruckung nicht wellig oder sonstwie nachteilig beeinflusst.

Alle vorgenannten beschichteten Substrate können noch weiteren Nachbehandlungsschritten unterzogen werden. So kann die Oberfläche des beschichteten Substrats weiter geglättet werden. Dies kann durch ein Glättwerk, einen Mattkalander, einen Kalander oder einen Bürstkalander geschehen. Vorteilhaft sind solche Verfahren, bei denen die Glätte des Substrats erhöht wird, ohne das Volumen des Papiers durch diesen Schritt deutlich zu verringern. Alternativ kann die Oberflächenkontur des beschichteten Substrats durch einen Prägeschritt verändert werden. Hierfür ist z.B. ein Prägekalander geeignet. Die Oberflächenkontur kann auf beiden Seiten des beschichteten Substrats oder nur auf einer Seite des Substrats verändert werden, welches vorzugsweise die Seite ist, auf der die Beschichtungszusammensetzung aufgebracht wurde.

Durch das Aufbringen der Beschichtungszusammensetzung auf der mindestens einen Seite des Substrats wird die Bedruckbarkeit des Substrats weiter verbessert. Unerwarteterweise wird durch die Beschichtungszusammensetzung der Charakter des Substrats jedoch nicht oder nicht wesentlich verändert, sowohl das Aussehen, als auch die Haptik des Substrats werden durch die Beschichtungszusammensetzung nicht oder nicht wesentlich nachteilig beeinflusst. Das Substrat behält den Charakter eines ungestrichenen Substrats. Im Vergleich zu unbehandelten Substraten ist die Druckqualität jedoch signifikant verbessert. Dies gilt insbesondere für die Druckqualität eines nachfolgend aufgebrachten Ink-Jet-Druckes.

Die vorliegende Erfindung wird an den nachfolgenden Beispielen weiter illustriert.

### Beispiele

### Herstellung der Beschichtungszusammensetzung

90 g des anionischen Nanopigments Cartacoat® K303A (kolloidales Siliziumdioxid, mittlere Partikelgrösse 50 nm, BET-Oberfläche 40-60 g/qm) und 23,3 g des anionischen Nanopartikels Cartacoat® K301 A (kolloidales Siliziumdioxid, mittlere Partikelgrösse 12 nm, BET-Oberfläche 180-230 g/qm) (Feststoffgehalt für beide Pigmentdispersionen 30 %) werden mit 65 g Wasser vorgelegt. Hierzu werden 45 g Lumiten® PPR 8450 (PVP, Feststoff 30 %), 0,1 g Dynol® 604 (Tensid bzw. Entschäumer) sowie 65g des anionischen Plastikpigments HPO 62 (Feststoffgehalt 50 %, Tg = 55°C, Hersteller Dow Corporation) unter Rühren beigefügt.

Die erhaltene Zusammensetzung wird nachfolgend unter Rühren mit 30 g einer 40%igen Aluminiumformiatlösung versetzt, wobei eine Kationisierung des Systems erfolgt, welche durch eine weitere Zugabe von 26 g Catiofast ® CS (Polydiallyldimethylammoniumchlorid, Feststoff 30 %) "verstärkt" wird.

### Herstellung der Beschichtungszusammensetzung II

94,1 g des entionisierten Nanopigments LUDOX® TMA (kolloidales Siliziumdioxid, mittlere Partikelgrösse 12-25 nm, BET-Oberfläche 220g/qm, Feststoffgehalt der Pigmentdispersion 34 %) werden mit 56 g Wasser und 50 g LUMITEN® PPR 8450 (PVP, Feststoff 30 %) unter Rühren versetzt. Nachfolgend gibt man 0,1 g DYNOL® 604 (Tensid bzw. Entschäumer) sowie 56 g des anionischen Plastikpigments HPO 62 (Feststoffgehalt 50 %, Tg = 55 °C) zu. Unter Rühren wird der erhaltenenen Zusammensetzung 32,5 g einer 40%igen Aluminiumformiatlösung zugegeben, wobei eine Kationisierung des Systems erfolgt, welche durch eine weitere Zugabe von 40 g Catiofast ® CS (Dimethyldiäthlammoniumchlorid, Feststoff 30 %) "verstärkt" wird.

Auf ein Naturpapier mit einem Flächengewicht von 120 g/m² werden mittels eines Rakels auf einer Seite die Beschichtungszusammensetzungen 1 oder II aufgebracht. Nach Trocknen der jeweiligen Beschichtungszusammensetzung beträgt das Auftragsgewicht der Beschichtungszusammensetzung 2,5 g/m².

Die jeweiligen beschichteten Papiere werden mit einem Ink-Jet-Drucker bedruckt. Hierbei zeigt sich, dass im Vergleich zu dem unbehandelten Naturpapier die Brillanz der Farbflächen erhöht wurde. Außerdem zeigen die Farbflächen ein gleichmäßiges Aufliegen der Druckfarbe. Insgesamt ist festzustellen, dass durch die Aufbringung der Beschichtungszusammensetzung eine Verbesserung des Ink-Jet-Druckes erzielt wurde. Gleichzeitig wird allerdings die Haptik und das optische Erscheinungsbild der unbedruckten Papiere durch die Beschichtung nicht verändert.

## Patentansprüche

1. Verfahren zur Herstellung einer Beschichtungszusammensetzung umfassend die Schritte:
a) Vorlage einer wässrigen Zusammensetzung, enthaltend mindestens ein Plastikpigment mit einer Glasübergangstemperatur (T_{g}) von mindestens 50 °C, und
b) Zugabe einer kationischen Substanz, enthaltend Salze von zweiwertigen und/oder dreiwertigen Kationen, wobei der Beschichtungszusammensetzung vor Zugabe der kationischen Substanz in Schritt b) mindestens ein anionisches Pigment mit einem mittleren Teilchendurchmesser von 1 nm bis 500 nm zugegeben wird und/oder der Beschichtungszusammensetzung nach Zugabe der kationischen Substanz in Schritt b) mindestens ein kationisches Pigment mit einem mittleren Teilchendurchmesser von 1 nm bis 500 nm zugegeben wird.

2. Das Verfahren gemäß Anspruch 1, **dadurch gekennzeichnet, dass** das Plastikpigment in Schritt a) eine Glasübergangstemperatur von mindestens 55 °C, weiter bevorzugt von mindestens 60 °C und am meisten bevorzugt von mindestens 65 °C aufweist.

3. Das Verfahren gemäß Anspruch 1 oder 2, **dadurch gekennzeichnet, dass** das Plastikpigment in Schritt a) ein Styrol-Butadien-Copolymer und/oder Styrolpolymer ist, welches vorzugsweise eine Dispersion eines Styrol-Butadien-Copolymers und/oder Styrolpolymers ist.

4. Das Verfahren gemäß mindestens einem der vorgenannten Ansprüche, **dadurch gekennzeichnet, dass** das Plastikpigment in Schritt a) ein nichtfilmbildendes Plastikpigment ist.

5. Das Verfahren gemäß mindestens einem der vorgenannten Ansprüche, **dadurch gekennzeichnet, dass** das Plastikpigment in Schritt a) ein massives und/oder Hohlkörper Plastikpigment ist.

6. Das Verfahren gemäß mindestens einem der vorgenannten Ansprüche, **dadurch gekennzeichnet, dass** das Plastikpigment in Schritt a) einen mittleren Partikeldurchmesser von 100 nm bis 2000 nm aufweist.

7. Das Verfahren gemäß mindestens einem der vorgenannten Ansprüche, **dadurch gekennzeichnet, dass** die kationische Substanz in Schritt b) eine monomere kationische Substanz ist.

8. Das Verfahren gemäß mindestens einem der vorgenannten Ansprüche, **dadurch gekennzeichnet, dass** die kationische Substanz in Schritt b) ausgewählt ist aus Verbindungen, enthaltend Metalle oder Halbmetalle der zweiten oder dritten Hauptgruppe des Periodensystems der Elemente oder Mischungen derselben.

9. Das Verfahren gemäß mindestens einem der vorgenannten Ansprüche, **dadurch gekennzeichnet, dass** die kationische Substanz in Schritt b) ausgewählt ist aus Verbindungen, enthaltend Magnesium, Bor, Aluminium oder Mischungen derselben.

10. Das Verfahren gemäß mindestens einem der vorgenannten Ansprüche, **dadurch gekennzeichnet, dass** die kationische Substanz in Schritt b) ausgewählt ist aus Aluminiumformiat, Aluminiumsulfat, Alaun, niedermolekularen Aluminiumverbindungen, Aluminiumnitrat, Aluminiumnitratsulfat, Polyaluminiumchlorid (PAC) oder Mischungen derselben.

11. Das Verfahren gemäß mindestens einem der vorgenannten Ansprüche, **dadurch gekennzeichnet, dass** soviel der kationischen Substanz in Schritt b) zugegeben wird, dass die Beschichtungszusammensetzung nach erfolgter Zugabe eine kationische Ladung aufweist.

12. Das Verfahren gemäß mindestens einem der vorgenannten Ansprüche, **dadurch gekennzeichnet, dass** das anionische Pigment und/oder kationische Pigment ausgewählt ist aus der Gruppe Oxid und/oder gemischtes Oxid eines Metalls, Oxid und/oder gemischtes Oxid eines Halbmetalls/Halbleiters oder Mischungen derselben.

13. Das Verfahren gemäß mindestens einem der vorgenannten Ansprüche, **dadurch gekennzeichnet, dass** das anionische Pigment und/oder kationische Pigment einen mittleren Teilchendurchmesser von 10 nm bis 100 nm und weiter bevorzugt von 10 nm bis 70 nm aufweist.

14. Das Verfahren gemäß mindestens einem der vorgenannten Ansprüche, **dadurch gekennzeichnet, dass** das anionische Pigment und/oder kationische Pigment eine spezifische BET-Oberfläche von 40 bis 800 m²/g aufweist.

15. Das Verfahren gemäß mindestens einem der vorgenannten Ansprüche, **dadurch gekennzeichnet, dass** die Beschichtungszusammensetzung ein weiteres Additiv enthält, welches vorzugsweise ein Bindemittel ist.

16. Verfahren zur Herstellung eines beschichteten Substrates umfassend die Schritte:
a) Bereitstellung eines Substrates,
b) Herstellen einer Beschichtungszusammensetzung gemäß mindestens einem der Ansprüche 1 bis 15,
c) Aufbringen der Beschichtungszusammensetzung auf mindestens einer Seite des Substrates, und
d) Trocknen der Beschichtungszusammensetzung

17. Das Verfahren gemäß Anspruch 16, **dadurch gekennzeichnet, dass** das Substrat ein Papiersubstrat ist, welches vorzugsweise ein weißes oder farbiges Papiersubstrat ist.

18. Das Verfahren gemäß Anspruch 16 oder 17. **dadurch gekennzeichnet, dass** in Schritt c) soviel der Beschichtungszusammensetzung aufgebracht wird, dass nach Trocken in Schritt d) 1 bis 15 g/m² (atro) der getrockneten Beschichtungszusammensetzung auf dem Substrat vorhanden sind.

19. Eine Beschichtungszusammensetzung erhältlich nach dem Verfahren gemäß mindestens einem der Ansprüche 1 bis 15

20. Ein beschichtetes Substrat erhältlich nach dem Verfahren gemäß mindestens einem der Ansprüche 16 bis 18.

21. Beschichtetes Substrat umfassend
a) ein Substrat
b) eine Beschichtung aufgebracht auf mindestens einer Seite des Substrates, wobei die Beschichtung aufgebracht wird aus einer Beschichtungszusammensetzung erhältlich nach dem Verfahren gemäß mindestens einem der Ansprüche 1 bis 15 und die Beschichtungszusammensetzung nach Aufbringung getrocknet wird.
